# EUROPEAN PATENT SPECIFICATION

(11) **EP 1 069 158 B1**
(45) Date of publication and mention of the grant of the patent: **11.08.2004**
(21) Application number: 99125560.5
(22) Date of filing: 21.12.1999
(51) Int. Cl.: C08K 5/523, C08L 71/12, C08L 55/02

(54) **Flameproof thermoplastic resin composition**
Flammgeschützte thermoplastische Harzzusammensetzung
Composition ingnifuge de résin thermoplastique

(30) Priority: 14.07.1999 KR 9928442
(43) Date of publication of application: 17.01.2001
(73) Proprietor: Cheil Industries Inc., Kumi-shi, Kyungbuk (KR)
(72) Inventor: Jang, Bok-Nam, Seoul (KR); Kim, Se-Jong, Uiwang-shi, Kyungki-do (KR); Chang, Young-Kil, Seoul (KR); Lee, Gyu-Cheol, Suwon-shi, Kyungki-do (KR)
(74) Representative: Hering, Hartmut, Dipl.-Ing.

(56) References cited:
- EP-A- 0 359 469
- DE-A- 19 618 741
- DE-A- 19 831 321

## Description

The present invention relates to a flameproof thermoplastic resin composition. More particularly, the present invention relates to a flameproof thermoplastic resin composition that comprises a rubber modified styrene-containing resin and a polyphenylene ether resin as a base resin, a styrene-acrylonitrile copolymer containing from 5 to 18 % by weight of acrylonitrile as a compatibilizer, and an triphenyl phosphate as a flame retardant.

A rubber modified styrene-containing resin has a good processability, a high impact strength, and a good appearance. Accordingly, the resin has been widely applied to electric appliances and office supplies. In case that a rubber modified styrene-containing resin is applied to personal computers, facsimiles, and the like, which emit heat, flame-retardant property should be given to the resin for inhibiting combustibility thereof. A widely known method for providing the flame retardancy is that halogen-containing compounds or antimony-containing compounds are added to a rubber modified styrene-containing resin to give flame-retardant property. The halogen-containing compounds used in the above method are, for example, polybromodiphenyl ether, tetrabromobisphenol A, epoxy compounds substituted by bromine, chlorinated polyethylene, etc. An antimony trioxide and an antimony pentaoxide are commonly used as antimony-containing compounds.

The methods for improvement of flame-retardant property by applying halogen- or antimony-containing compound have advantages such as easy acquirement of the flame-retardant property and no deterioration of the physical properties. However, the disadvantages could be observed that the halogen-containing compound results in the corrosion of the mold itself by the hydrogen halide gases released during the molding process and is fatally harmful due to the toxic gases liberated in case of fire. Especially, since a polybromodiphenyl ether, mainly used for a halogen-containing flame retardant, can produce toxic gases such as dioxin or furan during combustion or incineration, flame retardants which are not prepared with halogen-containing compound have become a major concern in this field.

It is commonly known a method to apply a phosphorus or nitrogen compound as halogen-free flame retardant to a resin composition. However, usage of only phosphorus compound deteriorates heat resistance of a rubber modified styrene-containing resin and does not impart sufficient flame retardancy.

Generally, when a rubber modified styrene-containing resin such as ABS is burned, char is not produced due to decomposition and vaporization in most parts (Journal of Applied Polymer Science, 1998, vol 68, p1067). Therefore, to impart an effect of flame retardancy, it is necessary to add a char-forming agent to a resin composition, which plays a role to prohibit entrance of oxygen and emission of fuel by forming char on the surface of rubber with three-dimensional carbon chain bonds during combustion.

Japanese Patent Laid-open No. 7-48491 discloses a flameproof thermoplastic resin, made of adding a novolac phenolic resin and a phosphoric acid ester into a thermoplastic copolymer resin made from a rubber copolymer and an aromatic vinyl monomer. It was found that in order to obtain a good property of flame retardancy, a phenolic resin as a char-forming agent and a phosphoric acid ester compound as a flame retardant should be added in a lot of amount. However, in this case, the heat resistance of the resin composition is dropped drastically.

U.S. patent application No. 09/233415 discloses a halogen-free flameproof resin composition having a good property of flame retardancy prepared by mixing a styrene-acrylonitrile (SAN) copolymer having from 5 to 18 % by weight of acrylonitrile as a compatibilizer, an aromatic phosphoric acid ester compound as a main flame-retardant and a phenolic resin as a further flame-retardant to improve flame-retardant property of a resin composition and adding the mixture to a base resin comprising a rubber-modified styrene-containing resin and a polyphenylene ether resin. Good mechanical properties as well as a good improvement of flame retardancy and heat resistance were obtained, however, a phenolic resin used as char-forming agent of ABS resin causes the degradation of heat stability and weatherability.

The present inventors have found flameproof resin composition containing no phenolic resin in order to solve the above-mentioned problem. Generally, as the blend comprising an ABS resin and a polyphenylene ether resin have no compatibility each other, physical properties are degraded during extrusion processing to cause a poor property of mechanical strength. Accordingly, the present inventors have invented phenol-free flameproof thermoplastic resin composition which has a good property of mechanical strength by adding a styrene-acrylonitrile copolymer or styrene-containing graft copolymer containing a particular amount of acrylonitrile therein as a compatibilizer, in order to impart compatibility to the blend comprising an ABS resin and a polyphenylene resin.

An object of the present invention is to provide a thermoplastic resin composition which has good mechanical properties as well as good properties of flame retardancy, heat resistance and heat stability.

Another object of the present invention is to provide a flameproof thermoplastic resin composition which does not contain halogen-containing compounds which causes the environmental pollution during preparation or combustion of the resin.

A further object of the present invention is to provide a thermoplastic resin composition which contains no phenolic resin and imparts compatibility to a blend comprising an ABS resin and a polyphenylene resin by adding a styrene-acrylonitrile copolymer or styrene-containing graft copolymer containing a particular amount of acrylonitrile as a compatibilizer.

A further object of the present invention is to provide a flameproof thermoplastic resin composition which can obtain desirable properties by employing most widely used triphenyl phosphate of aromatic phosphoric acid ester compounds as a flame retardant.

A flameproof thermoplastic resin composition of the present invention consists essentially of (A) 40 to 95 parts by weight of a rubber modified styrene-containing resin composed of (a₁) 20 to 100% by weight of a styrene-containing graft copolymer resin which contains 18 to 50% by weight of acrylonitrile in the copolymer excluding rubber component and (a₂) 0 to 80% by weight of a styrene-containing copolymer which contains 18 to 50% by weight of acrylonitrile; (B) 5 to 60 parts by weight of a polyphenylene ether resin; (C) 2 to 40 parts by weight of a styrene-containing copolymer or a styrene-containing graft copolymer which contains 5 to 18% by weight of an acrylonitrile in the copolymer excluding rubber component per 100 parts by weight of the sum of (A) and (B); and (D) 5 to 30 parts by weight of a triphenyl phosphate per 100 parts by weight of the sum of (A) and (B).

The flameproof thermoplastic resin composition according to the present invention consists essentially of (A) a rubber modified styrene-containing resin composed of (a₁) a styrene-containing graft copolymer and (a₂) optionally, a styrene-containing copolymer; (B) a polyphenylene ether resin; (C) a styrene-acrylonitrile graft copolymer or styrene-containing copolymer containing 5 to 18% by weight of acrylonitrile in the copolymer excluding rubber component; and (D) a triphenyl phosphate.

It is preferable to blend (A) 40 to 95 parts by weight of a rubber modified styrene-containing resin; (B) 5 to 60 parts by weight of a polyphenylene ether resin; (C) 2 to 40 parts by weight of a styrene-containing copolymer or a styrene-containing graft copolymer which contains 5 to 18% by weight of an acrylonitrile in the copolymer excluding rubber component per 100 parts by weight of the sum of (A) and (B); and (D) 5 to 30 parts by weight of a triphenyl phosphate per 100 parts by weight of the sum of (A) and (B). The rubber modified styrene-containing resin is composed of (a₁) 20 to 100% by weight of a styrene-containing graft copolymer resin which contains 18 to 50% by weight of acrylonitrile in the copolymer excluding rubber component; and (a₂) 0 to 80% by weight of a styrene-containing copolymer which contains 18 to 50% by weight of acrylonitrile.

The present invention employs a rubber modified styrene-containing resin (A) and a polyphenylene ether resin (B) as a base resin. To improve compatibility between (A) and (B), a styrene-acrylonitrile copolymer or a styrene-containing graft copolymer using a rubber (C) is added to the base resin. The styrene-acrylonitrile copolymer and the styrene-containing graft copolymer (C) contains 5 to 18% by weight of acrylonitrile in the copolymer excluding rubber component. A triphenyl phosphate (D) is added as flame retardant.

The detailed descriptions of components of the resin composition according to the present invention are as follows:

### (A) Rubber Modified Styrene-containing Resin

A rubber modified styrene-containing resin means that a styrene-containing graft copolymer resin such as ABS, and the graft copolymer resin may contain a styrene-containing copolymer resin such as SAN.

In the rubber modified styrene-containing resin which is prepared of aromatic vinyl copolymers, rubber phase copolymers are dispersed in the form of particles in a matrix. The resin is prepared by mixing an aromatic vinyl monomer and a vinyl group-containing monomer, which can be polymerized therewith, in the presence of a rubber phase polymer. Such rubber modified styrene-containing resin is prepared by a known method such as emulsion polymerization, suspension polymerization or bulk polymerization, and is conventionally produced by an extrusion with a styrene-containing graft copolymer resin and a styrene-containing copolymer resin. In a bulk polymerization, both a styrene-containing graft copolymer resin and a styrene-containing copolymer resin are prepared together in one process. In other words, one step process is employed to produce a rubber modified styrene-containing resin. In other polymerizations, a styrene-containing graft copolymer resin and a styrene-containing copolymer resin may be prepared separately. In either case, the contents of rubber in a final rubber modified styrene-containing resin to the total weight of the base resin are preferably in the range of from 5 to 30% by weight. Examples of such resins are acrylonitrile-butadiene-styrene (ABS) copolymer resin, acrylonitrile-acryl rubber-styrene (AAS) copolymer resin, acrylonitrile-ethylenepropylene rubber-styrene (AES) copolymer resin, and the like.

In the rubber modified styrene-containing resin, a styrene-containing graft copolymer resin can be used alone or in combination with a styrene-containing copolymer resin in consideration of compatibility thereof. In this invention, a rubber modified styrene-containing resin is prepared by mixing 20 to 100% by weight of a styrene-containing graft copolymer resin (a₁) with 0 to 80% by weight of a styrene-containing copolymer (a₂).

### (a₁) Styrene-containing Graft Copolymer Resin

Examples of a rubber used for a styrene-containing graft copolymer resin are a diene-containing rubber such as polybutadiene, poly(styrene-butadiene) and poly(acrylonitrile-butadiene); a saturated rubber in which hydrogen is added to said diene-containing rubber; an isoprene rubber; a chloroprene rubber; a polybutyl acrylate; and an ethylene-propylene-diene. It is preferable to use a diene-containing rubber, more preferably a butadiene-containing rubber.

Aromatic vinyl group-containing monomers for use preparing the graft copolymer are styrene, α-methylstyrene, p-methylstyrene, etc. In the above examples, styrene is the most preferable. At least one copolymerizable monomer may be introduced and applied to said aromatic vinyl monomers. Preferably, the copolymerizable monomer is a cyanide vinyl-containing compound such as acrylonitrile or an unsaturated nitrile-containing compound such as methacrylonitrile.

The content of rubber is preferably in the range of from 10 to 60% by weight per the total weight of the graft copolymer resin. Except rubber component, it is preferable that the aromatic vinyl group-containing monomer is in the range of from 50 to 82% by weight, and the unsaturated nitrile-containing monomer is in the range of from 18 to 50% by weight. In addition, in order to give good characteristics of processability and heat resistance, the monomers such as acrylic acid, methacryl acid, maleic anhydride and N-substituted maleimide can be added in the graft polymerization. The amounts of the monomers are in the range of from 0 to 40% by weight based on the styrene-containing graft copolymer resin.

To acquire good impact strength and appearance when the styrene-containing graft copolymer is prepared, the average size of rubber particles is preferably in the range of from 0.1 to 4 µm.

### (a₂) Styrene-containing Copolymer Resin

The styrene-containing copolymer resin of the present invention is prepared by copolymerizing an aromatic vinyl group-containing monomer and a copolymerizable monomer, depending on the ratio and compatibility between monomers except rubber in the styrene-containing graft copolymer. The styrene-containing copolymer used in this invention is SAN copolymer resin which contains 18 to 50% by weight of acrylonitrile.

The examples of the aromatic vinyl-containing monomer are styrene, α-methylstyrene, p-methylstyrene, etc. Styrene is the most preferable. The aromatic vinyl group-containing monomer in the total copolymer resin is contained in the amount of from 50 to 82% by weight. The examples of the copolymerizable monomer are cyanide vinyl group-containing compounds such as acrylonitrile and unsaturated nitrile-containing compounds such as methacrylonitrile. It is preferable that 18 to 50% by weight of the copolymerizable monomer per the total copolymer is employed. In addition, 0 to 40% by weight of a monomer such as acrylic acid, methacrylic acid, maleic anhydride and N-substituted maleimide may be added and copolymerized thereto.

In the present invention, the rubber modified styrene-containing resin (A) is composed of 20 to 100% by weight of a styrene-containing graft copolymer resin (a,) which contains 18 to 50% by weight of acrylonitrile in the copolymer except rubber, and 0 to 80% by weight of a styrene-containing copolymer (a₂) which contains 18 to 50% by weight of acrylonitrile. The rubber modified styrene-containing resin (A) is employed as a base resin along with a polyphenylene ether (B). The base resin comprises 40 to 95 parts by weight of the rubber modified styrene-containing resin (A) and 5 to 60 parts by weight of the polyphenylene ether resin (B).

### (B) Polyphenylene Ether Resin

Polyphenylene ether resin is employed as a base resin to improve flame retardancy, heat resistance and rigidity of the resin composition according to the present invention. As examples of the polyphenylene ether resin, poly(2,6-dimethyl-1,4-phenylene) ether, poly(2,6-diethyl-1,4-phenylene) ether, poly(2,6-dipropyl-1,4-phenylene) ether, poly(2-methyl-6-ethyl-1,4-phenylene) ether, poly(2-methyl-6-propyl-1,4-phenylene) ether, poly(2-ethyl-6-propyl-1,4-phenylene) ether, poly(2,6-diphenyl-1,4-phenylene) ether, copolymer of poly(2,6-dimethyl-1,4-phenylene) ether and poly(2,3,6-trimethyl-1,4-phenylene) ether, and copolymer of poly(2,6-dimethyl-1,4-pheylene) ether and poly(2,3,5-triethyl-1,4-phenylene) ether can be used. Preferably, copolymer of poly(2,6-dimethyl-1,4-phenylene) ether and poly(2,3,6-trimethyl-1,4-phenylene) ether, and poly(2,6-dimethyl-1,4-phenylene) ether are preferably used, more preferably poly(2,6-dimethyl-1,4-phenylene) ether is used. The degree of polymerization of polyphenylene ether is not limited specifically, but considering heat-stability or processability of the resin composition, it is preferable that the viscosity of polypheylene ether is in the range of 0.1 to 0.8 measured in a chloroform solvent at 25 °C.

### (C) Styrene-acrylonitrile Copolymer or Styrene-containing Graft Copolymer Resin Having from 5 to 18% by Weight of Acrylonitrile

A styrene-acrylonitrile copolymer or styrene-containing graft copolymer is added to the base resin to improve compatibility between the rubber modified styrene-containing resin (A) and the polyphenylene ether resin (B). To prepare the styrene-containing graft copolymer, rubber is employed up to 60% by weight. The styrene-containing graft copolymer comprise 82 to 95 % by weight of a styrene and 5 to 18% by weight of acrylonitrile, except rubber. The method for polymerization of the copolymer above may optionally be selected from emulsion polymerization, suspension polymerization, and bulk polymerization in accordance with the conventional processes. It is preferable that the weight average molecular weight of the copolymer is in the range of from 50,000 to 300,000. A third monomer may be employed for copolymerization with styrene-acrylonitrile. The examples of the third monomer are methacrylate, maleic anhydride, phenyl maleimide, etc. To advance heat resistance, α-methyl styrene may be used instead of styrene. In the present invention, the amount of a styrene-acrylonitrile copolymer or a styrene-containing graft copolymer used as compatibilizer is preferably 2 to 40 parts by weight per 100 parts by weight of the base resin. If the copolymer (C) is not added, the resin composition shows reduction in mechanical properties due to low compatibility.

### (D) Triphenyl Phosphate (TPP)

The triphenyl phosphate used in the present invention is a compound having the following structural formula (I):

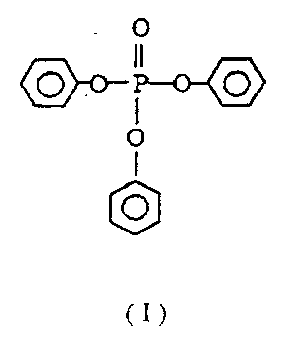

In this invention, the triphenyl phosphate is used in the form of white-colored crystalline powder having a melting point of 47 to 49°C. It is preferable that the triphenyl phosphate is used in the amount of from 5 to 30 parts by weight per 100 parts by weight of the base resin.

If necessary, a resin such as polyamide, polycarbonate, polyester, polystyrene, rubber reinforced polystyrene, polyacetal, polymethylmethacrylate, or silicon resin may be added optionally to the resin composition of this invention in the amount of from 0 to 30 parts by weight per 100 parts by weight of the base resin.

Other additives may be contained in the resin composition of the present invention. The additives include an anti-dripping agent, an impact modifier, plasticizer, a heat stabilizer, an oxidation inhibitor, a light stabilizer, a compatibilizer and the like. An inorganic filler such as talc, silica, mica, glass fiber, an organic or inorganic pigment and/or dye can be added too. The additives are employed in the amount of 0 to 50 parts by weight on the basis of 100 parts by weight of the base resin.

The resin composition according to the present invention has Izod impact strength (1/8" notched) of 10 to 30kg cm/cm and heat distortion temperature of more than about 90°C. Further, the resin composition has a flame retardancy (1/10") of V-0 or V-1, a good property of heat stability during extrusion molding, injection molding, and the like, and good characteristics of physical properties.

The invention may be better understood by reference to the following examples which are intended for the purpose of illustration and are not to be construed as in any way limiting the scope of the present invention, which is defined in the claims appended hereto. In the following examples, all parts and percentage are by weight unless otherwise indicated.

### EXAMPLES

The components to prepare flameproof thermoplastic resin compositions in Example 1 and Comparative Examples 1 ∼2 are as follows:

### (A) Rubber Modified Styrene-containing Resin

A rubber modified styrene-containing resin was prepared by mixing 40% by weight of a styrene-containing graft copolymer resin with 60% by weight of a styrene-containing copolymer resin.

### (a₁) Styrene-containing Graft Copolymer Resin (ABS)

50 parts of butadiene rubber latex powder, 36 parts of styrene, 14 parts of acrylonitrile and 150 parts of deionized water were blended. To the blend, 1.0 parts of potassium oleate, 0.4 parts of cumenhydroperoxide, 0.2 parts of mercaptan-containing chain transfer agent, 0.4 parts of glucose, 0.01 parts of ferrous sulfate hydrate, and 0.3 parts of sodium pyrophosphate were added. The blend was kept at 75 °C for 5 hours to obtain ABS latex. To the ABS latex, 0.4 parts of sulfuric acid was added, coagulated and dried to obtain styrene-containing graft copolymer resin (g-ABS) in a powder form.

### (a₂) Styrene-containing Copolymer Resin (SAN with 25% by weight of acrylonitrile)

75 parts of styrene, 25 parts of acrylonitrile, 120 parts of deionized water and 0.2 parts of azobisisobutylonitrile were blended. To the blend, 0.4 parts of tricalciumphosphate and 0.2 parts of mercaptan-containing chain transfer agent were added. The resultant solution was heated to 80°C for 90 minutes and kept for 180 minutes. The resultant was washed, dehydrated and dried. Styrene-acrylonitrile copolymer (SAN) having a weight average molecular weight of 180,000 was obtained.

### (B) Polyphenylene Ether Resin

Poly(2,6-dimethyl-1,4-phenylene) ether with an intrinsic viscosity of 0.42 at chloroform solution was used. The particles had the average size of several microns (µ m).

### (C) Styrene-acrylonitrile Copolymer (SAN with 13 % by weight of AN)

87 parts of styrene, 13 parts of acrylonitrile, 120 parts of deionized water, 0.1 parts of azobisisobutylonitrile, 0.2 parts of 1,1'-di(tertiarybutylperoxy)-3,3',5-trimethylcyclohexane, 0.4 parts of tricalcium phosphate and 0.2 parts of mercaptan-containing chain transfer agent were blended. The blended solution was heated up to 80°C for 90 minutes and was kept it for 150 minutes. The solution was heated up to 95 °C again and kept for 120 minutes. The resultant was washed, dehydrated and dried. Styrene-acrylonitrile copolymer (SAN) having a weight average molecular weight of 120,000 and 13% by weight of acrylonitrile component was obtained.

### (D) Triphenyl Phosphate (TPP)

Triphenyl phosphate having a melting point of 48°C was used herein.

### (E) Phenolic Resin

Novolac phenolic resin of PSM 4324 Grade of Japan Gunei Co. was used herein.

The components to prepare flameproof thermoplastic resin compositions in Example 1 and Comparative Examples 1∼2 are shown in Table 1.

**Table 1**

| | Example | Comparative Examples | |
|---|---|---|---|
| | 1 | 1 | 2 |
| Rubber modified styrene containing resin (A) | 70 | 70 | 70 |
| Polyphenylene ether (B) | 30 | 30 | 30 |
| SAN(AN: 13 wt. %) (C) | 15 | - | 15 |
| Triphenyl phosphate (D) | 17 | 17 | 17 |
| Phenolic resin (E) | - | - | 5 |

In the Example and Comparative Examples, the components were blended and extruded in the form of pellets with a twin-screw extruder at 200 ∼ 280°C. The pellets were dried at 80°C for 3 hours and extruded into test specimens in a 6 oz. extruder at molding temperature of 220∼280°C and barrel temperature of 40∼80°C, and the resin pellets were molded into test specimens. Impact strengths of the test specimens of the Example and Comparative Examples were measured according to Izod impact strength ASTM D-256 (1/8" notched), heat distortion temperatures were measured under load of 4.6kg according to ASTM D-6498, and flame retardancy (1/10") was measured according to UL94 VB. Heat stability was evaluated on the basis of whether color difference(Δ E) between the test specimens was over 1 or whether black speck, black line, yellow line, and the like have been formed, when the test specimens are extruded at 250°C. The test results are presented in Table 2.

**Table 2**

| | Example | Comparative Examples | |
|---|---|---|---|
| | 1 | 1 | 2 |
| Imact strength(1/8") (kg ·cm/cm) | 25 | 7 | 20 |
| heat deformation temp.(°C) | 90 | 91 | 88 |
| UL 94(1/10") | V-1 | V-1 | V-1 |
| heat stability | good | good | bad |

A flameproof resin applied for commercial purpose should have Izod impact strength of more than 10, and show suitable heat deformation temperature and a good property of heat stability.

As shown in Example 1, the resin composition of the present invention had a good impact strength due to styrene-acrylonitrile copolymer or styrene-containing graft copolymer (C) improving compatibility between ABS resin and polyphenylene ether. Further, flame retardancy, heat resistance, and heat stability were enhanced. When compared with impact strength of 25 obtained in Example 1, Comparative Example 1 not employing the component (C) showed impact strength reduced to 7. Comparative Example 2 containing phenolic resin (E) showed much lower heat stability in comparison with Example 1.

As described above, the resin composition of the this invention obtains good mechanical properties due to compatibility improved by adding the resin (C) to the base resin, and shows good flame retardancy by employing only triphenyl phosphate without a phenolic resin as an auxiliary flame retardant. In addition, flame retardancy, heat resistance, and heat stability were improved.

The present invention can be easily carried out by an ordinary skilled person in the art.

## Claims

1. A flameproof thermoplastic resin composition consisting essentially of:
(A) 40 to 95 parts by weight of a rubber modified styrene-containing resin being composed of (a₁) 20 to 100 % by weight of a styrene-containing graft copolymer containing 18 to 50 % by weight of acrylonitrile in the copolymer excluding the rubber portion and (a₂) 0 to 80 % by weight of a styrene-containing copolymer containing 18 to 50 % by weight of acrylonitrile;
(B) 5 to 60 parts by weight of polyphenylene ether resin;
(C) 2 to 40 parts by weight of a styrene-containing copolymer or a styrene-containing graft copolymer which uses optionally to 60 % by weight of rubber containing 5 to 18 % by weight of an acrylonitrile in the copolymer excluding the rubber portion per 100 parts by weight of the sum of (A) and (B); and
(D) 5 to 30 parts by weight of a triphenyl phosphate per 100 parts by weight of the sum of (A) and (B).

2. The flameproof thermoplastic resin composition as defined in claim 1, wherein said polyphenylene resin is a poly(2,6-dimethyl,1,4-phenylene) ether.

3. The flameproof thermoplastic resin composition as defined in claim 1, wherein said styrene-containing copolymer resin (C) is further copolymerized with a copolymerizable monomer.

4. The flameproof thermoplastic resin composition as defined in claim 3, wherein said copolymerizable monomer is selected from the group consisting of methacrylate, maleic anhydride, and phenyl maleimide.

5. The flameproof thermoplastic resin composition as defined in any of preceding claims, wherein said resin composition further comprises 0 to 30 parts by weight of polyamide, polycarbonate, polyester, polystyrene, rubber reinforced polystyrene, polyacetal, polymethylmethacrylate, and/or silicon resin, per 100 parts by weight of said base resin (A) and (B).

6. The flameproof thermoplastic resin composition as defined in any one of claims 1-5, wherein said resin composition further comprises an anti-dripping agent, an impact modifier, plasticizer, a heat stabilizer, an oxidation inhibitor, a light stabilizer, a compatibilizer, a pigment, a dye and/or an inorganic filler.

7. The flameproof thermoplastic resin composition as defined in any of preceding claims, wherein said resin composition further comprises 0 to 30 parts by weight of a resin selected from the group consisting of polyamide, polycarbonate, polyester, polystyrene, rubber reinforced polystyrene, polyacetal, polymethacrylic acid methyl, silicon resin and a mixture thereof, per 100 parts by weight of said base resin (A) and (B).

8. A molded article produced from the flameproof thermoplastic resin composition as defined in any one of claims 1-7.

## Patentansprüche

1. Nicht entflammbare thermoplastische Harzzusammensetzung bestehend im wesentlichen aus:
(A) 40 bis 95 Gewichtsteilen eines kautschuk-modifizierten Styrol-haltigen Harzes zusammengesetzt aus (a₁) 20 bis 100 Gewichts-% eines Styrol-haltigen Pfropfcopolymer, das 18 bis 50 Gewichts-% Acrylonitril in dem Copolymer, mit Ausnahme des Kautschukanteils, enthält und (a₂) 0 bis 80 Gewichts-% eines Styrol-haltigen Copolymers, das 18 bis 50 Gewichts-% Acrylonitril enthält;
(B) 5 bis 60 Gewichtsteilen eines Polyphenylenetherharzes;
(C) 2 bis 40 Gewichtsteilen eines Styrol-haltigen Copolymers oder Styrol-haltigen Pfropfcopolymers, das wahlweise bis 60 Gewichts-% Kautschuk verwendet, enthaltend 5 bis 18 Gewichts-% Acrylonitril in dem Copolymer, mit Ausnahme des Kautschukanteils, pro 100 Gewichtsteile der Summe von (A) und (B); und
(D) 5 bis 30 Gewichtsteilen Triphenylphosphat pro 100 Gewichtsteile der Summe von (A) und (B).

2. Nicht entflammbare thermoplastische Harzzusammensetzung, wie in Anspruch 1 definiert, bei der das Polyphenylenharz Poly(2,6-dimethyl-1,4-phenylen)ether ist.

3. Nicht entflammbare thermoplastische Harzzusammensetzung, wie in Anspruch 1 definiert, bei der das Styrol-haltige Copolymerharz (C) weiterhin mit einem copolymerisierbaren Monomer copolymerisiert ist.

4. Nicht entflammbare thermoplastische Harzzusammensetzung, wie in Anspruch 3 definiert, bei der das copolymerisierbare Monomer ausgewählt wird aus der Gruppe bestehend aus Methacrylat, Maleinsäureanhydrid und Phenylmaleimid.

5. Nicht entflammbare thermoplastische Harzzusammensetzung, wie in einem der vorherigen Ansprüche definiert, bei der die Harzzusammensetzung weiterhin 0 bis 30 Gewichtsteile Polyamid, Polycarbonat, Polyester, Polystyrol, Kautschuk verstärktes Polystyrol, Polyacetal, Polymethylmethyacrylat und/oder Silikonharz pro 100 Gewichtsteile des Grundharzes (A) und (B) umfaßt.

6. Nicht entflammbare thermoplastische Harzzusammensetzung, wie in einem der Ansprüche 1 bis 5 definiert, bei der die Harzzusammensetzung außerdem Antitropfmittel, Schlagmodifikationsmittel, Weichmacher, Hitzestabilisatoren, Oxidationsinhibitoren, Lichtstabilisatoren, Kompatibilitätsmittel, Pigment, Farbstoff und/oder anorganische Füllmittel umfaßt.

7. Nicht entflammbare thermoplastische Harzzusammensetzung, wie in einem der vorherigen Ansprüche definiert, bei der die Harzzusammensetzung außerdem 0 bis 30 Gewichtsteile eines Harzes ausgewählt aus der Gruppe bestehend aus Polyamid, Polycarbonat, Polyester, Polystyrol, Kautschuk verstärktes Polystyrol, Polyacetal, Polymethylmethacrylat, Silikonharz und eine Mischung daraus pro 100 Gewichtsteile des Grundharzes (A) und (B) umfaßt

8. Formteil hergestellt aus der nicht entflammbaren thermoplastischen Harzzusammensetzung, wie sie in einem der Ansprüche 1 bis 7 definiert ist.

## Revendications

1. Composition de résine thermoplastique ignifuge composée essentiellement de :
(A) 40 à 95 parties en poids d'une résine contenant du styrène modifié au caoutchouc étant composée de (a₁) 20 à 100 % en poids d'un copolymère greffé contenant du styrène contenant 18 à 50 % en poids d'acrylonitrile dans le copolymère, à l'exclusion de la portion de caoutchouc, et (a₂) 0 à 80 % en poids d'un copolymère contenant du styrène contenant 18 à 50 % en poids d'acrylonitrile :
(B) 5 à 60 parties en poids d'une résine de polyphénylène éther ;
(C) 2 à 40 parties en poids d'un copolymère contenant du styrène ou d'un copolymère greffé contenant du styrène qui utilise optionnellement jusqu'à 60% en poids de caoutchouc contenant 5 à 18 % en poids d'un acrylonitrile dans le copolymère, à l'exclusion de la portion de caoutchouc, pour 100 parties en poids de la somme de (A) et (B) ; et
(D) 5 à 30 parties en poids d'un phosphate de triphényle pour 100 parties en poids de la somme de (A) et (B).

2. Composition de résine thermoplastique ignifuge selon la revendication 1, dans laquelle ladite résine polyphénylène est un poly(2,6-diméthyl, 1,4-phénylène)éther.

3. Composition de résine thermoplastique ignifuge selon la revendication 1, dans laquelle ladite résine copolymère contenant du styrène (C) est en outre copolymérisée avec un monomère copolymérisable.

4. Composition de résine thermoplastique ignifuge selon la revendication 3, dans laquelle ledit monomère copolymérisable est sélectionné parmi le groupe composé de méthacrylate, anhydride maléique, et de phényle maléimide.

5. Composition de résine thermoplastique ignifuge selon l'une quelconque des revendications précédentes, dans laquelle ladite composition de résine comprend en outre 0 à 30 parties en poids de polyamide, polycarbonate, polyester, polystyrène, polystyrène renforcé au caoutchouc, polyacétal, polyméthylméthacrylate et/ou résine de silicone, pour 100 parties en poids de ladite résine de base (A) et (B).

6. Composition de résine thermoplastique ignifuge selon l'une quelconque des revendications 1 à 5, dans laquelle ladite composition de résine comprend en outre un agent anti-goutte, un agent modifiant de la résistance aux impacts, un plastifiant, un stabilisant thermique, un antioxydant, un photostabilisant, un compatibilisant, un pigment, un colorant et/ou une charge inorganique.

7. Composition de résine thermoplastique ignifuge selon l'une quelconque des revendications précédentes, dans laquelle ladite composition de résine comprend en outre 0 à 30 parties en poids d'une résine sélectionnée parmi le groupe composé de polyamide, polycarbonate, polyester, polystyrène, polystyrène renforcé au caoutchouc, polyacétal, méthyle d'acide polyméthacrylique, résine de silicone et un mélange de ceux-ci, pour 100 parties en poids de ladite résine de base (A) et (B).

8. Article moulé produit à partir de la composition de résine thermoplastique ignifuge selon l'une quelconque des revendications 1 à 7.
